Europäisches Patentamt

European Patent Office

Office européen des brevets

(11) Publication number: **0 236 778**
**A1**

# (12) EUROPEAN PATENT APPLICATION

(21) Application number: 87102038.4

(22) Date of filing: 13.02.87

(51) Int. Cl.⁴: **C02F 3/20 , B08B 5/00**

(30) Priority: 06.03.86 US 836947

(43) Date of publication of application:
16.09.87 Bulletin 87/38

(84) Designated Contracting States:
ES FR IT

(71) Applicant: **NORTON COMPANY**
**1 New Bond Street**
**Worcester Massachusetts 01606(US)**

(72) Inventor: **Cummings, Paul W., Jr.**
**1 Buckley Road**
**Worcester Massachusetts(US)**

(74) Representative: **Baillie, Iain Cameron et al**
**c/o Ladas & Parry Isartorplatz 5**
**D-8000 München 2(DE)**

(54) **Activated sludge treatment process.**

(57) A treating process is shown for removing cloggants from the pores and surfaces of aeration diffuser elements used in an activated sludge treatment process or the like. In this process, an acid gas is fed to the plenum chambers that support the respective elements to be treated, and water is permitted to flow from the sludge mass through the diffusers into the plenums to form the desired acid solution for reacting with the cloggants to be removed. The process is performed so that the acid solution fills the pores and contacts the surfaces of the diffusers and the plenums and the submerged piping network and the acid solution is then agitated in contact with the diffusers to react with the cloggants in the pores and on the surfaces of the diffusers to rejuvenate these elements.

EP 0 236 778 A1

This invention relates to an aeration treatment system and more particularly to a process for rejuvenating the diffusers in an activated sludge or other process diffusion systems.

The following U.S. Patents are illustrative of the prior art:

U.S. 2,684,330 to French July 20, 1954
2,686,138 to Klein et al August 10, 1954
2,826,209 to Klein et al March 11, 1958
3,150,007 to Kovachy September 22, 1964
4,238,244 to Banks December 9, 1980
4,382,867 to Schmit et al May 10, 1983
4,419,141 to Kunkel December 6, 1983

These prior art cleaning means for diffusers and cleaning procedures for other aeration devices include French who proposes to burn the cloggants out of the pores and from the surface of diffusers with an oxyacetylene flame which would leave the ash residue from any oxidized organic deposits in the pores. Klein '138, suggests using a detergent and water jets to remove the foulants. He discusses the known use of chlorine circulated through the diffuser system but suggests that such a process does not adequately remove the deposits. Klein '209 also discusses the inadequacies of the prior art cleaning processes that make use of strong acid solutions that are so strong as to dissolve the soil or to disperse the soil in sufficiently fine particles as to pass through the extremely fine pores of the diffusers but which are also so strong that they carbonize and fix the accumulated organic materials so that this residue becomes lodged in and on the diffuser elements. He proposes another cleaning procedure making use of high pressure water jets.

In a related art, Kovachy discloses using nascent hydrofluoric acid on stone surfaces to remove accumulated surface dirt by reacting the acid with silicates and carbonates in the composition of the stone. His invention is concerned with a cleaner that frees the nascent acid directly on the surface to be cleaned, to which the cleaner has been applied like a paint to produce a microscopic surface reaction. The reaction products are then flushed from the surface being cleaned with water or steam.

Industrial apparatus found in nuclear power plants acquire deposits and become corroded. Various acids and other chemical cleaning agents are flushed through the systems from time to time to remove these cloggants. Banks suggests that a gas such as carbon dioxide be dissolved in water under super atmospheric pressure to carry the cleaning chemicals so that the hydrostatic pressure can be raised and lowered to release the dissolved $CO_2$ to agitate the flushing fluids while the cleaning action proceeds.

Schmit et al discloses the process of cleaning diffusers used in an activated sludge process by pumping hydrogen chloride gas through the treating gas distribution system as to flow through the open pores in the diffusers. The cleaning process is initiated from time to time or is used continuously during the sewage aeration treatment process depending upon the operating pressures prevailing throughout the system.

Kunkel shows how to clean viscous substances from labyrinthine channel systems by using a liquid solvent through the system. The solvent, having gas bubbles dispersed throughout its mass with an additional pulsing gas, is injected into the solvent dispersed into the channel system to produce additional agitation.

The activated sludge sewage treatment processes discussed in certain of the patents cited above, are used for rendering sewage wastes innocuous. Generally a large mass of the wastewater to be treated is aerated by bubbling minute air bubbles that may include another treating gas, through the diffuser into the mass. For that purpose, a number of diffuser elements are integrally mounted to a gas delivery duct work system arranged below the mass of sewage being aerated such that the treating gas is forced into the aqueous mass through the diffusers and is divided into small bubbles as the air flows through the pores of the diffusers. These bubbles enter near the bottom of the mass to be treated and slowly rise to the surface. As some of the gasses in the bubbles react with the sludge mass, some organic and inorganic foulants and other insoluble compounds may deposit out of the aqueous mass onto the surface or in the pores of the diffusers. Some of the organic residues contain living organisms that can produce slime and other forms of matter that can progress into the pores of the diffusers. These deposits can gradually build up on the surfaces and in the pores of the diffusers, restricting the flow of air into the wastewater.

As stated in the cited patents, it has been found if and when the restriction occurs it is necessary from time to time to rejuvenate these diffuser elements. The most useful of the known procedures used heretofore to eliminate such deposits, is to force a flow of chlorine or other acid gas into the treating gas (usually air) distribution network and through these porous media. The chlorine or acid gas has been found to react with the living organisms clogging the pores and also to dissolve the inorganic residue which has formed.

This procedure, however, making use of a relatively expensive and hazardous supply of hydrochloric or other acid gas has been found to flow mainly through the open pores of the diffuser being cleaned such that not all of the residue clogging the diffusers is brought into contact with the gas. Any pores in the diffuser being rejuvenated that have become totally blocked do not enjoy a flow of hydrochloric or other gas. These completely blocked passages remain clogged. Also some of the smaller partially clogged pores that might otherwise be open to a cleansing gas flow are filled with fluid by capillary action, and unless the pressure of the cleaning gas is sufficiently high as to blow out these pores, they remain closed and untreated because the hydrochloric or acid gas cannot overcome the capillary forces that prevail in these passages.

It is generally accepted that the typical cloggants that are deposited out of the aqueous mixture of sludge being aerated in an activated sludge treatment process, where foulants may collect upon the air diffusers and clog their pores, are mainly unstable and/or dissolve in the presence of an acid. The present disclosure describes a series of manipulative steps adapted to be used from time to time to attack such cloggants so that they may be dissolved and pushed out of the pores of the diffusers including those filled with fluid by capillary attraction. After a proper reaction has been completed on the diffusers, the reaction products are washed away from substantially all of the pores and surfaces of the porous diffusers. These diffusers remain in situ during the rejuvenation process.

A system is here shown that is built into the aeration gas distribution network for feeding an acid liquid or gas into the treating gas distribution network for delivery to the diffusers to be rejuvenated. The acid, liquid or gas, flows to selected ones or to all of such diffusers susceptible to clogging in an amount to cause the treating gas and acid mixture to fill the pores in the diffusers and fill the plenum chambers upon which they are mounted. The acid liquid or gas flow is then cut-off and the treating gas pressure within the network is reduced. Back water from the aqueous sludge confined over the diffusers flows into and through the pores and into the distribution piping and plenum chambers to mix with the acid liquid or gas contained in the treating gas flow. When the backflow water combines with the acid in the treating gas, pressure is reinstated (preferably in a pulsing manner) to force the acid liquid into the pores of the diffusers, at which point the pressure is discontinued. The acid solution then reacts with the cloggants to free them from the internal pores and from surfaces of the diffusers being treated. The acid liquid may be forced into the diffusers by an application of gas or liquid pressure one or more additional times if necessary to clean the diffusers to the desired degree. After a quiescent time period to permit the back water flow and the acid-cloggant reaction to be substantially completed or to exhaust the acid content of the pores, the aeration network system is again activated in a manner to produce a pulsating agitating effect on the acid solution as it is being forced from the plenum chambers and the open and capillary pores of the diffusers. The reaction products and the remaining acid solution is forced into the aqueous mass of sludge in the holding tank. Following thereafter, a further quantity of acidified liquid is forced into the diffuser pores to continue the reaction to remove cloggant materials. When the cloggant has been fully reacted with the acid, the treating gas only is applied to the system. Thus the activated sludge treatment process over the rejuvenated diffusers is reactivated with an improved flow of treating gas bubbles into the sludge.

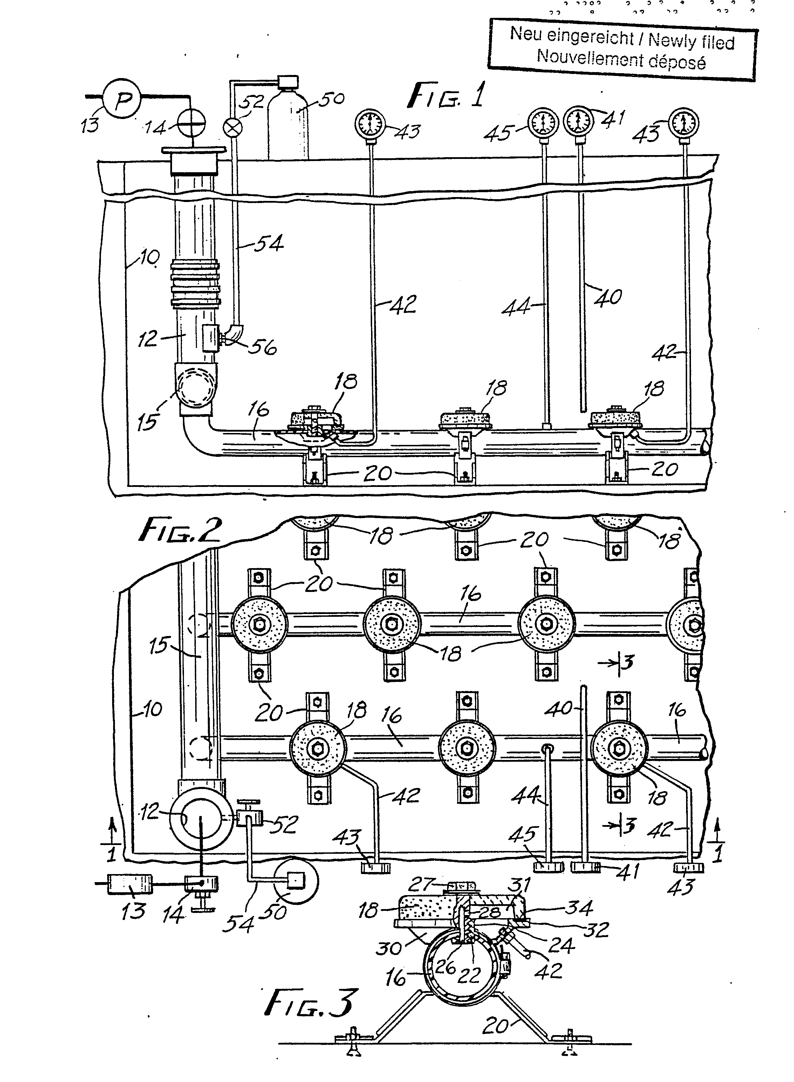

Figure I is a partly broken away and - schematic sectional side elevation taken on line I-I of Figure 2, showing a portion of an activated sludge aeration tank, the gas distribution network and the aeration diffusers;

Figure 2 is a top plan view of the tank of Figure I; and

Figure 3 is a view taken on line 3-3 of Fig. 2, showing how a typical diffuser may be supported over the gas distribution network.

A typical activated sludge treatment system such as is shown in the drawings usually includes a number of aeration tanks. The dimensions of a tank are not critical but typically tanks may 30' x 30' x 15' deep, but can be larger in aera and any depth up to 30' deep. The tanks are filled with an aqueous sludge. A suitable air or other treatment gas distributing piping network is built into the tank that includes a drop leg 12 that is connected to an air pump 13 and valve 14 shown diagramatically in Figures I and 2. The drop pipe feeds the treating gas under a pressure from .2 to 2.0 psi greater than the pressure exerted by the liquid but usually in a range of 6 to I0 psi into a horizontal main header I5 disposed along one side of the bottom of the holding tank I0. A plurality of smaller horizontally disposed branch headers I6 are connected to the main header. Each of the branch headers being adapted to deliver any gas or liquid pumped into this gas distribution network into a plurality of air diffusers I8 mounted over the branch headers I6.

The branch headers are suitably supported on a plurality of pipe supports 20 and each of such branch headers has a series of apertures 22 along the center line of its upper surface. Seated on top of the branch headers and surrounding each aperture 22, there is a closed housing member 30 that forms a plenum chamber 3I that is sealed by a diffuser I8 that is mounted on housing 30 to complete the chamber 3I. For this purpose, the housing 30 has a circular seat 32 facing upwardly for receiving a downwardly facing section 34 integral with the diffuser that is adapted to be sealed against the seat 32 when the centrally disposed bolt 27 is tightened into plug 24. Each one of the apertures is adapted to have a threaded plug element 24 integrally mounted therein for cooperating with the threads 26 of the bolt 27, the lower portion of the stem of the bolt being hollow. At the upper end of the hollow portion of the stem of the bolt there is an opening 28 passing through the wall of the stem so that air or any gas delivered under pressure into the air distribution system can flow from the branch header 16 through the hollow portion of the bolt and out through opening 28 into the plenum chamber 31. Other means of diffuser attachment and orifice gas flow control are also possible.

A plurality of diffusers 18 are provided to be mounted over each one of the series of apertures 22 disposed along the top of the several branch headers 16. Such an arrangement provides a multiplicity of diffusers spaced rather uniformly over the bottom of the holding tank 10 to produce the flow of air or other gas treatment bubbles that are released into the aqueous sludge held in the tank. In a typical 30' × 30' tank, there may be as many as 312 diffusers uniformly positioned over the bottom surface of the tank.

While the above describes one well known structure for use in an aeration system for an activated sludge treatment process, it is merely typical of a number of such systems, some of which may make use of differently shaped or mounted diffusers but all of which diffusers have similar plenum chamber supports covered by porous types of body structures. All such sewage treatment systems require the distribution of minute bubbles of air or other treating gas to flow upwardly through the sludge being treated, the bubbles being formed when the treating gas is pumped through the gas distribution system under pressure to flow through the network for feeding the air or other gas to the underside of such known porous diffuser elements to be released into the aqueous sludge mass.

As the treatment process proceeds, certain insoluble oxidation products and sedimentary particles may be deposited on and in the diffusers. It also happens that certain of such deposits include living microorganisms that may grow and gradually accumulate in the pores of the diffusers to at least partly block the flow of air or other treating gas passing therethrough. Ultimately, if these foulants or cloggants are not removed, the diffusers may become plugged or covered to the point so as to inhibit the proper aeration of the sludge mass.

Other such deposits may cover the surface of the diffusers, not necessarily increasing back pressure, but causing the small bubbles to coalesce to the detriment of the process requirements.

By measuring the several air pressures that prevail at various points throughout the distribution network, it is possible to determine when a back pressure is being built up behind the diffuser elements thus indicating that there has been an unwanted restriction of the flow of air or treating gas through the diffusers. To determine when such blocking occurs the typical system here shown may include two or three randomly positioned bubble tubes 40 through which air is pumped at low volumes under pressure in order to provide an indication on pressure guage 41 of the pressure head, caused only by liquid depth, against which the air or treating gas being diffused through the diffuser element must be pumped. An air pressure reading is also made through several randomly positioned conduits 42 to determine the actual air or gas pressure on guage 43 prevailing in the typical plenum chamber 31 and likewise other conduits 44 and guages 45 similarly randomly situated are connected to several of the branch headers 16 for determining the pressure in those zones of the treatment system. Depending upon the readings on the respective pressure guages 41, 43, and 45, a reliable estimate can be made as to the clogged condition of the several porous diffuser elements distributed throughout any given tank in the system. The diffusers which have been coated by foulants can be observed to produce unusual aeration patterns on the surface of the aqueous liquid.

When it has been determined that the diffuser elements are approaching the stage where they have become sufficiently impaired as to possibly interfere with the adequate treatment of the sludge, an agressive liquid acid treatment process is initiated to render the cloggants water soluble such that the reaction products can be flushed free from the diffuser element surfaces and from their pores. After the diffusers have been subjected to the liquid acid rejuvenating treatment for a sufficient time period to loosen most or all of the cloggants, the flow of treating gas through the network is reestablished to clear the diffusers of the acid and reaction products for continuing the activated sludge treatment program.

The acid treatment of the diffusers in the system here shown is accomplished by feeding a liquid acid or water soluble acid gas such as hydrogen chloride into the already flowing stream of treating gas being forced into the drop leg 12 to flow into the header 15 and all, or by operating valve means not shown, selected ones of the branch headers 16. The relatively pure form of the acid liquid or gas from any suitable supply 50 is pumped or flows by its own pressure through valve 52 into conduit 54 and to distributing head 56 that feeds the liquid acid or gas into the drop leg. Depending upon the capacity of the sludge treatment tank. The liquid acid or gas flow is continued for a time period of about 20 seconds for each 100 diffusers in the tank or along a particular header and for a longer time if necessary so that the treating gas from pump 13 with the acid liquid or gas mixed therewith, will reach all of the diffuser elements to be rejuvenated, in order to fill their open pores with the mixture containing the acid liquid or gas. After all or the selected ones of the branch headers 16, their respective plenum chambers 31 and the open pores of the diffuser elements have been filled with the mixed treating gas and acid liquid or with acid liquid or gas alone valve 14 in the treating gas supply or a valve (not shown) in the individual header is closed and the valve 52 in the acid gas supply system is closed. When the gas flow into the selected plenums 31 of the diffusers being treated is cut-off, the pressure in these plenums drops and water in the sludge mass over the diffusers is allowed to back flow through the diffusers into such plenums 31. A vent may be opened to facilitate rapid water infiltration. The back flow water mixes with the acid liquid or gas in the pores of the diffusers and in the plenums, which pores and plenums gradually become filled with the acid solution.

When the back flow of water into the plenums has continued for a sufficient time to substantially fill the plenum chambers, the treating gas and acid liquid or gas flow or a water flow combined with acid, liquid or gas, is again initiated for a period of about 30 seconds to force the acid liquid into the open pores of the diffuser and to cause the acid solution in the plenum to be flushed against any plugged up, but water filled pores, and to be agitated against the cloggant in any completely closed pores. Then the treating gas flow and acid gas flow are again shut off for a time period to allow the acid solution in the plenum chamber, in the pores, and on the surface of the diffuser elements, to further react with the cloggants. It may be desirable during this relatively quiescent reaction time period to produce just sufficient pressure within the piping network system to maintain a continuous liquid acid contact with all of the air flow passages and surfaces of the diffusers exposed on their undersides to the acid solution in their respective plenums. Such fluid pressure can be produced in the distributing network that will assure flow of the acid solution through openings 28 in the hollow bolts so that the flow of acidified water will flow slowly through the diffusers being rejuvenated.

It has been found, when upon initiating a liquid or gas flow again after a quiescent period within the gas distribution network, that the frictional conditions which prevail in the piping gas system cause a gas and/or liquid pulsing action to take place that causes successive pressure waves to proceed down the individual branch header or headers 16 to which the newly pressurized gas and/or liquid flow is being admitted. It has been observed for example, in a treating tank where the aqueous sludge mass just covers all of the diffusers, that when the treating gas flow process is begun, the first row of diffusers nearest the main horizontal header 15 will show a row of air bubbles, then the second row becomes activated, then the third row, etc. This ripple effect has been observed to last for at least several minutes as successive rows or successive pressure ripples follow one another along the header. The supply of gas seems to bounce within the header 16 of the network system for at least a few minutes as first one row and then the next row of diffusers etc. become alternately energized and deenergized yielding alternating "slugs" of gas and water pulsing throughout the network.

This phenomenon is utilized in the process herein described, to cause the acid solution in the plenums and in pores of the diffusers being rejuventated to be agitated within the pores of and around the surfaces of these diffusers. The agitation of course promotes a more complete and faster reaction between the acid and cloggants whereby to speed up and enhance the desired rejuvenation process. The molecular dispersion of acid in the capillary pores is also promoted by this agitation, whereby a most complete and thorough scrubbing of the diffusers is accomplished.

After a second quiescent time period of between 1 minute and several hours, depending upon the particular rate of chemical reaction with the cloggant, is allowed to transpire wherein to allow the cloggants to be as fully reacted as possible with the acid solution in the pores and on the surface of the diffusers, the gas treatment flow from pump 13 is reestablished and the acid gas supply is cut-off. When the aeration treating gas flow is started again any acid solution in the plenums and in the pores of the diffusers, is blown clear through the pores and all of water soluble reacted cloggant products are driven into the sludge mass. The rejuvenated diffuser elements then become reactivated to continue the sludge treatment process. The process is repeated as many times as required to achieve the desired degree of cleaning.

With the above described method it is seen that none of the pores of the diffuser element become dried out as when only a gas passes therethrough and none of the capillary pores are by passed during performance of the acid treating step, since the acid solution surrounds all the pores filled with water. By reason of the molecular motion within the acid solution itself and also when the acid is mechanically agitated against the diffuser elements a more efficient rejuvenation of the diffusers results. The acid solution is held in a quiescent state around all of the exposed surfaces of the pores in the diffusers such that the molecular activity with the acid solution effects as complete a dispersion of the acid as is possible on the surface of the diffuser and in all of its pores since even capillary pores that might otherwise be blocked with water loaded cloggants are subjected to the acid reaction whereby to attack the cloggants within such pores so that they are reopened. In addition, the periodic agitation of the acid solution in contact by means of the liquid or gas pulsing effect with the diffusers, maximizes the rejuvenation process.

In this process, the acid treatment accomplishes the desired rejuvenation of the diffusers with a minimum expenditure of acid liquid or gas which is pushed into the network in an amount needed only to produce the desired acid treating solution. The liquid form of treatment of the cloggants with the acid solution is thus inherently more effective than the gas flow-through procedure used heretofore wherein the gaseous form of acid flows only through the already open pores and does not always effectively reach any of the cloggants in the closed capillary pores.

In making use of the herein disclosed method for rejuvenating clogged diffuser elements, a liquid form of an acid solution is formed directly in the plenums to produce the desired acid solution for reaction with the cloggants to be removed. After the acid solution is produced by the back flow of water from the sludge mass above the diffusers, the acid liquid or gas flow is cut-off, thus minimizing the necessity of wasting additional acid liquid or gas. Such a system will reduce the need for centra centralized complicated hazardous gas piping, valves and safety shut-off apparatus, such as are required for handling a larger compressed acid gas supply that would otherwise be required to maintain a continuous chlorine or acid gas flow. When used with liquid acid, availability is increased, cost is reduced, safety is enhanced and fluid handling and control is simplified.

As above indicated, all of the diffusers can be treated simultaneously, or if desired, an alternate treating method could be utilized wherein the diffusers along a selected one or selected ones of the branch headers 16 are rejuvenated while the remaining diffusers served by other drop legs 12 continue the aeration treatment of the sewage mass.

## Claims

1. An activated sludge treatment process wherein sewage in an aqueous form is rendered innocuous by passing a treating gas through a distribution network which has a plurality of multi-pore diffusion elements submerged in the mass, each of which individual elements is supported over its respective plenum chamber, which plurality of elements and their plenum chambers are carried by that portion of the gas distribution network which is submerged in said dispersion, and during the performance of which treating process acid reactive cloggants may have a tendency to form deposits in the pores of and on the surfaces of said elements, the cloggants which form in the pores having a tendency to cause a progressive restriction of the flow of treating gas through said diffusion elements and the cloggants which form on the surface causing a progress enlargement of bubble size and deterioration of aeration uniformity, characterized by: rejuvenating said diffusion elements in-situ by removing at least a portion of said cloggants deposited in and on said elements by reacting them with an acid solution in order to reduce such constriction to the flow of treating gas through said pores and to cause surface cloggants to be released, said cloggant removal reaction being performed with an acid solution formed by dissolving a soluble acid liquid or gas in water, filling the pores of said elements and said plenum chambers and said gas distribution network with said solution; stopping the flow of treating gas to said elements from time to time to allow the reaction to proceed, and then performing said acid-cloggant reaction with such frequency on the cloggants in the pores and on said diffusion elements as to rejuvenate said elements whereby to maintain a reasonable flow of treating gas through said selected elements at a reasonable flowing pressure and bubble pattern, and then reestablishing the flow of treating gas through said rejuvenated diffusion elements to flush the reaction products from said pores and said surfaces into said aqueous dispersion and continue said activated sludge treatment process.

2. A process according to claim 1, characterized by the fact that said acid solution is formed and said acid solution is applied to said diffusion elements by feeding said soluble acid gas, with or without treating gas, into and through the gas distribution network which delivers said treating gas to said elements to be subjected to said cloggant removal reaction, said network having gas flow regulating means therein for controlling the flow of said gas into the plenums over which said elements are supported, at least partially filling the pores of said elements and their respective plenums with said acid gas, stopping the gas flow, permitting a back flow of water from said aqueous dispersion to fill said pores and the respective plenums and gas distribution network over which said elements are supported, and dissolving said acid gas or liquid in said back flow water to form said acid solution, then permitting said acid solution and cloggants reaction to proceed in the pores of and on said elements, and then after completing said reaction, performing said step for reestablishing said flow of treating gas.

3. A process according to claim I or 2, wherein said gas distribution network includes a plurality of individual submerged header networks, each one of the headers in a network is adapted to support a plurality of said element supporting plenums; and said reaction is performed selectively on the elements carried on their respective plenums on a selected one or selected ones of said individual feed pipes in said system.

4. A process according to claim 3, characterized by the fact that each individual header network is adapted to an individual treating gas feed pipe with several sets of individual header networks comprising a complete system.

5. A process according to any one of the preceding claims, characterized by the fact that said acid solution on said surfaces, in said pores, in said plenums, and in said distribution piping is agitated as said acid-cloggant reaction proceeds.

6. A process according to claim .5, characterized by the fact that said agitation is produced by a controlled flow of gas in said network.

7. A process according to any one of the preceding claims, characterized by the fact that said acid-cloggant reaction is performed in a first phase and second phase steps by allowing the reaction to proceed for a time period to complete said first phase step and then filling the plenums with an additional charge of acid gas or liquid for solution in said water to replace the volume of acid liquid deleted from said acid solution during said first phase step for performance of said subsequent phase steps.

FIG. 1

FIG. 2

FIG. 3

# EUROPEAN SEARCH REPORT

**European Patent Office**

Application number

EP 87 10 2038

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 382 867 (WATER POLLUTION CONTROL CORP.) * Column 58, claims 1-3; column 16, line 53 - column 17, line 60; column 60, claim 77 * | 1-4 | C 02 F 3/20 B 08 B 5/00 |
| A | EP-A-0 047 956 (STERLING DRUG) * Claims 1-7 * | 1 | |
| A | US-A-4 152 259 (CLEVEPAK) * Front page abstract * | 2,4-6 | |

TECHNICAL FIELDS SEARCHED (Int. Cl.4)

C 02 F
B 08 B
B 01 F
C 12 M

The present search report has been drawn up for all claims

| Place of search | Date of completion of the search | Examiner |
|---|---|---|
| THE HAGUE | 04-06-1987 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82